# EUROPEAN PATENT APPLICATION

(11) **EP 1 075 998 A1**
(43) Date of publication of application: **14.02.2001**
(21) Application number: 99115142.4
(22) Date of filing: 11.08.1999
(51) Int. Cl.: B62D 5/06, F16F 9/348

(54) **Damper valve for hydraulic power steering device**

(71) Applicant: SHOWA CORPORATION, Gyoda-shi, Saitama (JP)
(72) Inventor: Hamano, Satoshi, Haga-gun, Tochigi (JP); Aiko, Satoshi, Haga-gun, Tochigi (JP)
(74) Representative: Casalonga, Axel

(57) **Abstract**

A damper valve (10) for a hydraulic power steering device where the damper valve is disposed at any portion of a hydraulic oil circuit connecting a changing-over valve in a gear box (3) and a power cylinder, including a partition member (12) for partitioning the interior of a valve casing (11) into two chambers, and a shaft member (13) extending through a central portion of the partition member, wherein a first valve mechanism (14) allowing hydraulic oil to flow only in one direction is provided in the partition member, and a second valve mechanism (15) allowing hydraulic oil to flow only in the other direction is provided in the shaft member. The first valve mechanism includes a plurality of communication holes (16) formed in the partition member and a leaf spring (17) for opening/closing the plurality of communication holes. The second valve mechanism includes ball type check valve. Flow of hydraulic oil in the other direction is an outward flow directed from the changing-over valve towards the power cylinder.

## Description

The present invention relates to a damper valve for a hydraulic power steering device used in a vehicle, and more particularly to a damper valve for a hydraulic power steering device, whose structure is simplified and whose manufacturing cost is reduced.

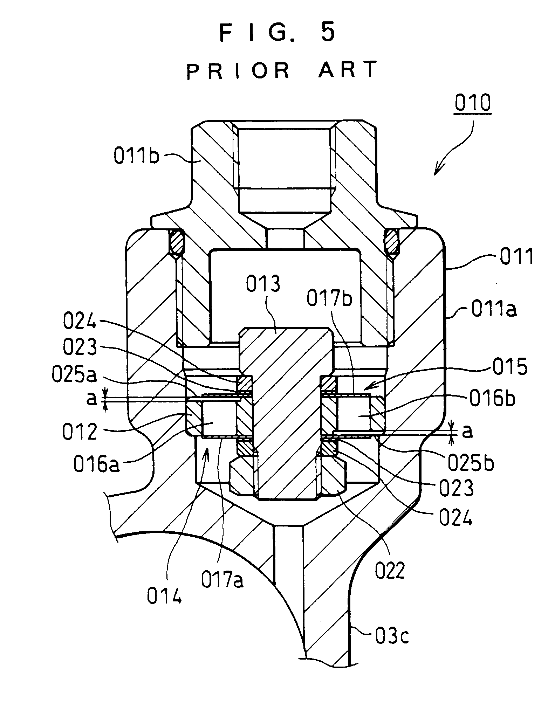

A conventional damper valve in a hydraulic power steering device used in a vehicle is shown in Fig. 5.

A damper valve 01 of this type is provided with a partition member 012 for partitioning the interior of a valve casing 011 into two chambers. In the partition member 012, a first valve mechanism 014 allowing hydraulic oil to flow only in one direction and a second valve mechanism 015 allowing hydraulic oil to flow only in the other direction are provided.

The first valve mechanism 014 comprises a plurality of communication holes 016a formed in the partition member 012 and a leaf spring 017a capable of opening/closing the communication holes 016a. Also, the second valve mechanism 015 comprises a plurality of communication holes 016b formed in the partition member 012 adjacent to the communication holes 016a and a leaf spring 017b capable of opening/closing the communication holes 016b. The communication holes 016a and the communication holes 016b have the same diameter, and the leaf spring 017a and the leaf spring 017b are formed in the same shape.

Reference numerals 013 and 022 denote a bolt and a nut for bringing the leaf springs 017a and 017b forcibly into contact with the partition member 012 via a pair of valve seats 023 and 023 and a pair of stopper seats 024 and 024, and reference numeral 03c denotes a casing of a changing-over valve for controlling flow of hydraulic oil (which is not illustrated in detail), the casing being formed integrally with a body portion 011a of the valve casing 011 by casting. Reference numeral 011b denotes a lid portion of the valve casing 011 which also serves as a socket for connecting a pressure pipe forming a hydraulic oil circuit between a power cylinder (not shown) and the same.

In a conventional device configured in the above manner, when an outward flow (flow from the changing-over valve towards the power cylinder) of hydraulic oil between the changing-over valve and the power cylinder pushes and opens the leaf spring 017b to flow or pass through the second valve mechanism 015, the flow is subjected to resistance from the leaf spring 017b, thereby losing kinetic energy of the hydraulic oil to some extent.

Also, when an inward flow (flow from the power cylinder towards the changing-over valve) of hydraulic oil between the changing-over valve and the power cylinder pushes and opens the leaf spring 017a to pass through the first valve mechanism 014, the flow is subjected to resistance from the leaf spring 017a, thereby losing kinetic energy of the hydraulic oil to some extent.

Since the first valve mechanism 014 and the second valve mechanism 015 operates in the above manner, when vibrations are transmitted to the power cylinder during running of a vehicle from a road wheel side (not shown) via a tie-rod, the vibrations are damped and are not transmitted to the steering wheel via the changing-over valve, so that comfort of the steering operation is maintained.

In such a configuration, however, in an area where the leaf spring 017a covers the communication holes 016b, a bored oil passage 025b having a step 'a' must be formed at an opening peripheral edge of the communication hole 016b positioned on a side of the leaf spring 017a so as not to prevent the outward flow.

Similarly, in an area where the leaf spring 017b covers the communication holes 016a, a bored oil passage 025a having the same step 'a' must be formed at an opening peripheral edge of the communication hole 016a positioned on a side of the leaf spring 017b so as not to prevent the inward flow. For this reason, the structure of the partition member 012 becomes complicated, and manufacturing the partition member 012 also becomes troublesome.

Also, since it is necessary to sandwich both sides of the partition member 012 by the two leaf springs 017a and 017b via the pair of valve seats 023 and 023 and the pair of stopper seats 024 and 024, assembling work has become troublesome. For these reasons, the manufacturing cost of the damper valve 01 has been increased.

Furthermore, since, when the outward flow of hydraulic oil pushes and opens the leaf spring 017b to pass through the second valve mechanism 015, the flow is not only subjected to resistance from the leaf spring 017b but is also subjected to resistance from the leaf spring 017a so that the hydraulic oil becomes more difficult to flow through the bored oil passage 025b and the communication holes 016b, the loss in kinetic energy of the hydraulic oil is further increased and a smooth supply of hydraulic oil to the power cylinder is prevented, thereby deteriorating operability of the power steering.

An object of the present invention is to provide a damper valve for a hydraulic power steering device which solves such problems and which is capable of improving operability of a power steering mechanism as well as facilitating manufacturing and assembling, thereby reducing manufacturing cost.

The present invention is directed to a damper valve for a hydraulic power steering device where the above problems have been solved A first aspect thereof is a damper valve for a hydraulic power steering device where a changing-over valve in a gear box and a power cylinder are connected to each other by two pressure pipes, comprising a partition member disposed at any portion of a flow passage for hydraulic oil between the changing-over valve and the power cylinder to partition the interior of a valve casing into two chambers, and a shaft member extending through a central portion of the partition member, wherein a first valve mechanism allowing the hydraulic oil to flow only in one direction is provided at the partition member and a second valve mechanism allowing the hydraulic oil to flow only in the other direction is provided in the shaft member.

The present invention will be more fully understood from the detailed description given below and from the accompanying drawings which should not be taken to be a limitation on the invention, but are for explanation and understanding only.

### The drawings

Fig. 1 is a front view showing a hydraulic power steering device to which a damper valve according to an embodiment of the present invention is applied:
Fig. 2 is a longitudinal sectional view of the damper valve in Fig. in one operation state:
Fig. 3 is a longitudinal sectional view of the damper valve in another operation state:
Fig. 4 is a plan view of a partition member used in the damper valve in Fig. 1: and
Fig. 5 is a longitudinal cross-sectional view showing a conventional damper valve.

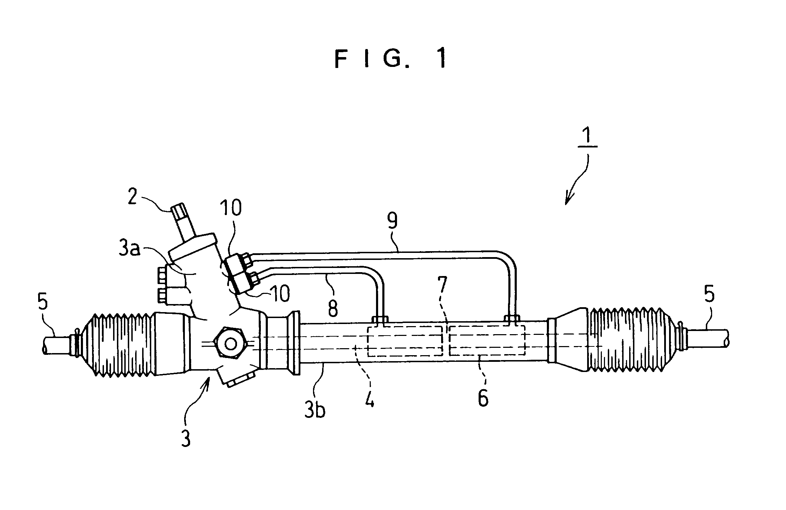

An embodiment of the present invention described in claims 1 to 4 will be explained with reference to Figs. 1 to 4.

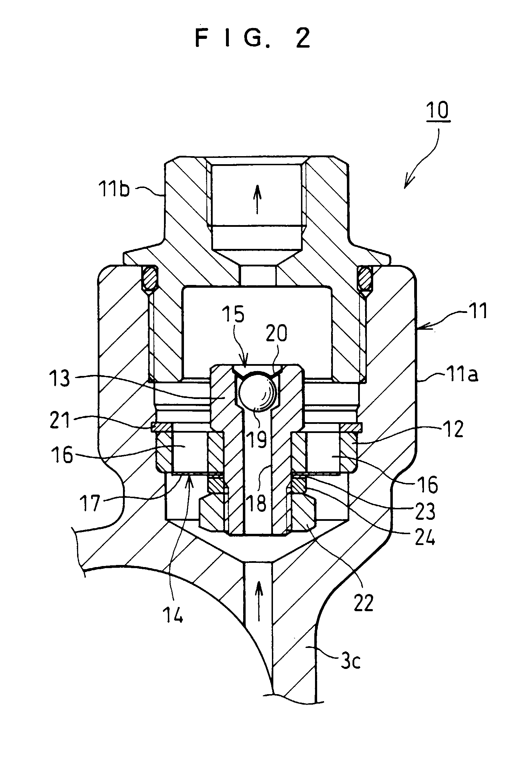

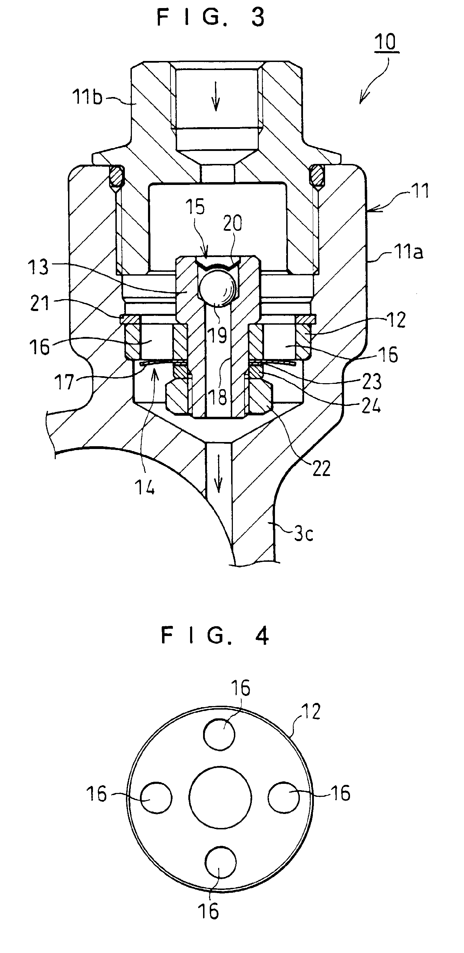

Fig. 1 is a front view of a hydraulic power steering device to which a damper valve in one embodiment is applied, Fig.2 is a longitudinal sectional view of the damper valve in one operation state, Fig. 3 is a longitudinal sectional view of the damper valve in another operation state, and Fig. 4 is a plan view of a partition member used in the damper valve.

In Fig. 1, a hydraulic power steering device 1 to which a damper valve 10 according to the embodiment is applied is a rack and pinion type power steering device where an input shaft 2 coupled to a steering wheel of a vehicle (not shown) is connected to an output shaft (a pinion shaft) (not shown) via a torsion bar within a changing-over valve accommodating portion 3a of a gear box 3, and a rack shaft 4 having a rack meshing with a pinion formed on the output shaft is accommodated within a rack shaft and power cylinder accommodating portion 3b slidably in left and right directions in Fig. 1.

A pair of left and right tie-rods 5, 5 are respectively connected to both ends of the rack shaft 4, and a piston 7 of a power cylinder 6 accommodated in the rack shaft and power cylinder accommodating portion 3b is connected to an intermediate portion of the rack shaft 4. Accordingly, the rack shaft 4 also serves as a rod (piston rod) of the piston 7.

A changing-over valve (not shown) is accommodated in the changing-over valve accommodating portion 3a of the gear box 3, and it is opened according to a distortion amount of the torsion bar, namely, a difference in relative rotation amount between the input shaft 2 and the output shaft, so that the hydraulic oil fed from a pump (not shown) with pressure is supplied to one of left and right chambers of the power cylinder 6 through a supply passage of the changing-over valve and a pressure pipe 8 or a pressure pipe 9, while hydraulic oil is returned back to a reservoir tank (not shown) from the other of left and right chambers of the power cylinder 6 through the pressure pipe 9 or the pressure pipe 8 and a return passage of the changing-over valve.

Accordingly, when the rack and the pinion mesh with each other and the rack shaft 4 is moved in a left or right direction, the tie-rods 5 and 5 are moved in unison in a left or right direction according to the left or right movement of the rack shaft 4, and the tie-rods 5 and 5 are moved in unison in a left or right direction according to the left or right movement of the piston 7 of the power cylinder 6, so that steering of left and right road wheels is performed on the basis of an assisting steering force.

Here, as shown in Fig. 1, two damper valves 10 and 10 are mounted on a casing of the changing-over valve accommodating portion 3a of the gear box 3.

These damper valves 10 and 10 are disposed on a hydraulic oil circuit connecting the changing-over valve and the power cylinder 6, for suppressing vibrations from being transmitted to the steering wheel via the pressure pipe 8, the pressure pipe 9 and the changing-over valve when the vibrations have been transmitted to the power cylinder 6 from the road wheels during operation of the vehicle. The structure of the damper valve 10 is illustrated in detail in Fig. 2.

As shown in Fig. 2, each damper valve 10 is provided with a partition member 12 for partitioning the interior of the valve casing 11 into two chambers, and a shaft member 13 extending through a central portion of the partition member 12 in an axial direction of the damper valve 10. The partition member 12 is provided at its changing-over valve side face with a first valve mechanism 14 allowing hydraulic oil to flow only in one direction, and the shaft member 13 is provided at its power cylinder side end portion with a second valve mechanism 15 allowing hydraulic oil to flow only in the other direction.

The first valve mechanism 14 comprises a plurality of communication holes 16 (refer to Fig. 4) formed on the partition member 12 at equal intervals in its peripheral direction and a leaf spring 17 for opening/closing the communication holes 16, and the second valve mechanism 15 is constituted by a ball type check valve. The ball type check valve is accommodated in a through hole 18 formed on a central portion of the shaft member 13 in its axial direction and it is provided with a ball 19 and a one way clip 20.

The partition member 12 is positioned and fixed to a step portion in the valve casing 11 by a circlip 21.

The shaft member 13 includes a large diameter portion and a small diameter portion. The small diameter portion extends through a central portion of the partition member 12, and a screw portion formed on a tip end portion thereof (a lower end portion in Fig. 2) is fastened with a nut 22. The shaft member 13 is firmly fixed to the partition member 12 by fastening the nut 22 to the screw portion.

A valve seat 23 and a stopper ring 24 are interposed between the nut 22 and a central portion of the leaf spring 17. When the nut 22 is fastened on the screw portion as mentioned above, the central portion of the leaf spring 17 is pressed onto and fixed to the partition member 12 via the valve seat 23 and the stopper ring 24.

The valve casing 11 comprises a body portion 11a and a lid portion 11b. The body portion 1 la is formed integrally with a casing 3c (refer to Fig. 2) of the changing-over valve accommodating portion 3a of the gear box 3 by casting. The lid portion 11b also serves as a socket connecting the pressure pipe 8 or the pressure pipe 9, forming a hydraulic oil circuit between the changing-over valve and the power cylinder 6.

Accordingly, when it is assumed that hydraulic oil is supplied from the changing-over valve in the changing-over valve accommodating portion 3a of the gear box 3 in a direction of the power cylinder 6, the hydraulic oil presses the ball 19 of the second valve mechanism 15 of one damper valve 10 to open the ball type check valve so that the hydraulic oil is supplied to one of the left and right oil chambers of the power cylinder 6 via the passage in the lid portion 11b and the pressure pipe 8 or the pressure pipe 9.

Simultaneously, the hydraulic oil in the other of the left and right oil chambers of the power cylinder 6 is pressurized to open the leaf spring 17 of the first valve mechanism 14 via the pressure pipe 9 or the pressure pipe 8 and the passage in the lid portion 11b of the other damper valve 10 so that it is returned back to the changing-over valve. Then, the hydraulic oil is returned back to a reservoir tank (not shown). An operation state of the other damper valve 10 in this case is shown in Fig. 3.

Also, when vibrations are transmitted to the power cylinder 6 from a road wheel side (not shown) via the tie-rods 5 and 5 during operation of a vehicle, the hydraulic oil positioned in a circuit (including the pressure pipe 8 and the pressure pipe 9) connecting the changing-over valve and the power cylinder 6 flows in either of the damper valves 10 according to a moving direction of the piston 7 in the same manner as described above. However, since the hydraulic oil flowing in any of the damper valves 10 opens either of the first valve mechanism 14 and the second valve mechanism 15 to flow, it is subjected to flowing resistance at this time, so that kinetic energy of the hydraulic oil is lost.

Thereby, the vibrations transmitted from the road wheel side to the power cylinder 6 are damped and are prevented from being transmitted to the steering wheel via the changing-over valve, so that comfort in the steering operation is maintained.

According to the present embodiment configured as mentioned above, the following effects can be obtained.

The damper valve 10 is provided with the partition member 12 for partitioning the interior of the valve casing 11 into two chambers. The shaft member 13 extends through the central portion of the partition member 12. The partition member 12 is provided with the first valve mechanism 14 allowing hydraulic oil to flow only in one direction, and the shaft member 13 is provided with the second valve mechanism 15 allowing hydraulic oil to flow only in the other direction.

As a result, since a first valve mechanism having a leaf spring and a second valve mechanism having a leaf spring are not assembled in the partition member 12, which is different from the conventional art, it is unnecessary to provide a bored oil passage or the like, and the structure of the partition member 12 is simplified. Therefore, manufacturing the partition member 12 is facilitated so that manufacturing cost of the damper valve 10 can be reduced.

Also, the outward flow of hydraulic oil (flow from the changing-over valve towards the power cylinder 6) flows only through the second valve mechanism 15 within the damper valve 10. Since there is no obstruction except for the second valve mechanism 15 and the fluid is able to flow within the damper valve 10 over the shortest distance, supply of hydraulic oil to the power cylinder 6 is performed smoothly, and operability of the power steering wheel is improved.

Further, since the first valve mechanism 14 comprises the communication holes 16 formed in the partition member 12 and the leaf spring 17 for opening/closing the communication holes 16, the structure of a valve provided on the partition member 12 which allows hydraulic oil to flow only in one direction is made simple. Also, assembling of the leaf spring 17 of one kind to the partition member 12 can be easily accomplished.

Furthermore, since the second valve mechanism 15 is constituted by a ball type check valve, the structure of a valve provided in the shaft member 13 which allows hydraulic oil to flow only in the other direction is made simple. Also, as the ball type check valve is structured by only fitting a ball 19 and a one way clip 20 into a through hole 18 formed in the shaft member 13, the assembling thereof is accomplished more easily.

Also, even though assembling a leaf spring 17 of one kind to the partition member 12 and assembling a ball 19 and a one way clip 20 to the shaft member 13 are required in this embodiment, the number of parts and the number of assembling steps are reduced, and work for assembling is alleviated, as compared with assembling leaf springs of two kinds to a partition member performed in the conventional art. As a result, manufacturing cost of the damper valve 10 can further be reduced.

Furthermore, since the body portion 11a of the valve casing 11 of the damper valve 10 is formed integrally with the casing 3c of the changing-over valve accommodating portion 3a of the gear box 3 by casting, mounting of the damper valve 10 on a hydraulic power steering device is accomplished more easily.

In this embodiment, the damper valves 10 are mounted to the casing of the changing-over accommodating portion 3a of the gear box 3 on two hydraulic oil circuits connecting the changing-over valve and the power cylinder 6. However, the present invention is not limited to such a structure, as the damper valves 10 may be mounted on a power cylinder side casing of the rack shaft and power cylinder accommodating portion 3b of the gear box 3.

While the preferred embodiments of the invention have been described in detail with reference to the drawings, they are by no means limitative, and various changes and modifications are possible without departing from the scope and spirit of the invention.

Although the invention has been illustrated and described with respect to several exemplary embodiments thereof, it should be understood by those skilled in the art that the foregoing and various other changes, omissions and additions may be made to the present invention without departing from the spirit and scope thereof. Therefore, the present invention should not be understood as limited to the specific embodiment set out above, but should be understood to include all possible embodiments which can be embodied within a scope encompassed and equivalents thereof with respect to the feature set out in the appended claims.

## Claims

1. A damper valve for a hydraulic power steering device where the damper valve is disposed at any portion of a hydraulic oil circuit connecting a changing-over valve in a gear box and a power cylinder, comprising:
a partition member for partitioning the interior of a valve casing into two chambers; and
a shaft member extending through a central portion of the partition member,
wherein a first valve mechanism allowing hydraulic oil to flow only in one direction is disposed in the partition member, and a second valve mechanism allowing hydraulic oil to flow only in the other direction is disposed in the shaft member.

2. A damper valve for a hydraulic power steering device according to claim 1, wherein the first valve mechanism comprises a plurality of communication holes formed in the partition member, and a leaf spring for opening/dosing the plurality of communication holes.

3. A damper valve for a hydraulic power steering device according to claim 1 or 2, wherein the second valve mechanism comprises a ball type check valve.

4. A damper valve for a hydraulic power steering device according to any one of claims 1 to 3, wherein the flow of hydraulic oil in the other direction is an outward flow directed from the changing-over valve towards the power cylinder.

5. A damper valve for a hydraulic power steering device according to any one of claims 1 to 4, wherein the valve casing is formed integrally with a portion of a casing accommodating the changing-over valve of the gear box by casting.
